# EUROPÄISCHE PATENTSCHRIFT

(11) **EP 0 456 091 B1**
(45) Veröffentlichungstag und Bekanntmachung des Hinweises auf die Patenterteilung: **08.03.1995**
(21) Anmeldenummer: 91106994.6
(22) Anmeldetag: 30.04.1991
(51) Int. Cl.: A47B 88/00

(54) **Verbindungsbeschlag**
Connection fitting
Ferrure de connexion

(30) Priorität: 07.05.1990 AT 1021/90
(43) Veröffentlichungstag der Anmeldung: 13.11.1991
(73) Patentinhaber: Julius Blum Gesellschaft m.b.H., 6973 Höchst (AT)
(72) Erfinder: Brüstle, Klaus, A-6973 Höchst (AT); Töfferl, Andreas, A-6971 Hard (AT)
(74) Vertreter: Hofinger, Engelbert, DDr.

(56) Entgegenhaltungen:
- WO-A-85/05541
- DE-A- 3 611 480
- DE-U- 8 912 349
- GB-A- 2 190 284

## Beschreibung

Die Erfindung bezieht sich auf einen Verbindungsbeschlag zur Befestigung der Reling einer Schublade mit einem an der Rück- oder Seitenwand befestigbaren Stützteil, an dem das hintere Ende der Reling gehalten ist und mit einem in der Reling einsteckbaren, vorzugsweise in diese einschraubbaren Befestigungsteil, an dem sich eine Arretiereinrichtung befindet, wobei der Befestigungsteil in den Stützteil einhängbar ist, und der Stützteil mit einem offenen Schlitz versehen ist, durch den der Befestigungsteil ragt.

Im modernen Möbelbau sind Schubladen bekannt, bei denen die Frontblende mittels besonderer Halteeinrichtungen an den Schubladenzargen verstellbar befestigt werden kann. In manchen Fällen ist an der Schublade oberhalb jeder Schubladenzarge eine Reling vorgesehen, die sich von der Frontblende bis zur Möbelrückwand bzw. einer an der Möbelrückwand befestigten Stütze erstreckt.

Aus der EP-A1-274084 ist ein Verbindungsbeschlag bekannt, bei dem der Befestigungsteil mittels einer Schraube am Stützteil befestigbar ist.

Die DE-A1-36 11 480 zeigt eine Relinghalterung, bei der ein bei der Schubladenrückwand angeordneter Stützteil vorgesehen ist, der eine Gewindeöffnung trägt, in die die Reling mit einem korrespondierenden Gewindestift einschraubbar ist. Der Stützteil ist mit einem vorspringenden bogenförmigen Teil mit zwei Nocken versehen, wobei zwischen den Nocken jeweils eine Kante der mit Rechteckprofil ausgeführten Reling einrastet.

Aufgabe der Erfindung ist es, einen derartigen Verbindungsbeschlag zur Befestigung der Reling an der von der Frontblende abgewendeten Seite zu verbessern. Dabei soll der Verbindungsbeschlag am Stützteil ohne Werkzeug befestigbar sein.

Die erfindungsgemäße Aufgabe wird dadurch gelöst, daß sich der Schlitz schlüssellochartig zu einer Aufnahmeöffnung erweitert und die Aufnahmeöffnung zumindestens annähernd kreisförmig und der Drehriegel im Querschnitt oval ist, sodaß der Drehriegel in der Aufnahmeöffnung durch Reibschluß verriegelbar ist.

Ein Ausführungsbeispiel der Erfindung sieht vor, daß sich der Schlitz schlüssellochartig zu einer Aufnahmeöffnung erweitert und sich in der Aufnahmeöffnung ein Federring befindet.

Ein weiteres Ausführungsbeispiel der Erfindung sieht vor, daß sich der Schlitz schlüssellochartig zu einer Aufnahmeöffnung erweitert, die Aufnahmeöffnung viereckigen Umriß hat und der Befestigungsteil einen Abschnitt mit korrespondierendem Querschnitt aufweist.

Vorteilhaft ist dabei vorgesehen, daß der Befestigungsteil eine seitlich vorspringende Nase aufweist, die in den Schlitz ragt. Dadurch wird das Herausnehmen der Reling aus dem Stützteil erleichtert.

Ein weiteres Ausführungsbeispiel der Erfindung sieht vor, daß der Befestigungsteil mit Reibschluß in der Aufnahmeöffnung verriegelbar ist, wobei der Befestigungsteil Spreizbacken aufweist und einen axialen Kanal, der einen Spreizstift aufnimmt.

Nachfolgend werden verschiedene Ausführungsbeispiele der Erfindung anhand der Figuren der beiliegenden Zeichnungen eingehend beschrieben.

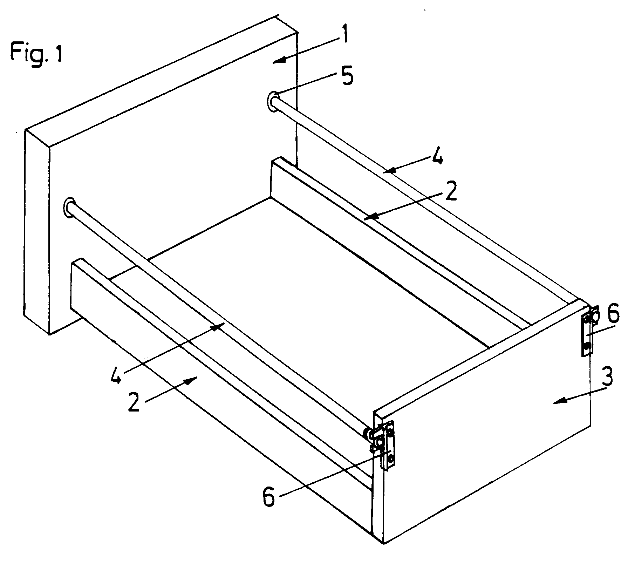

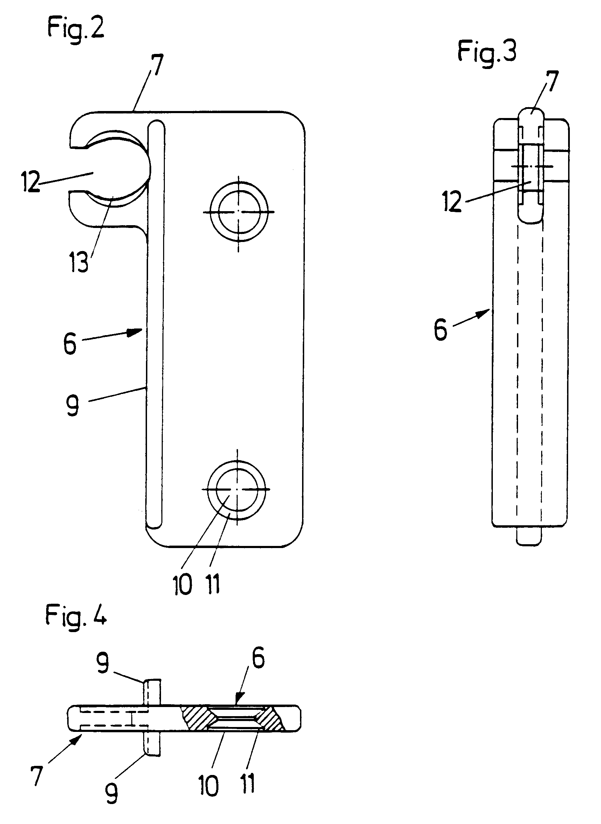

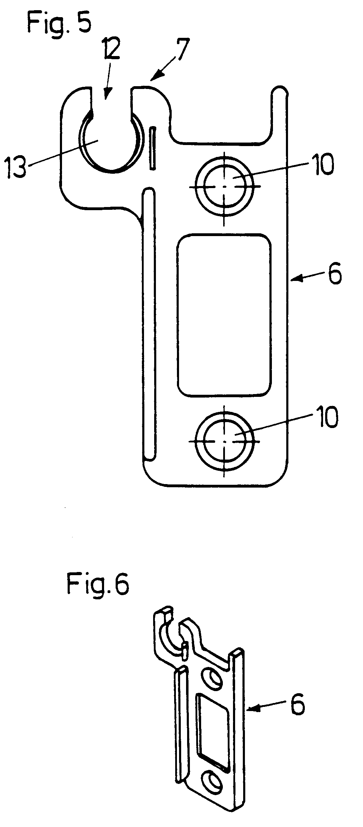

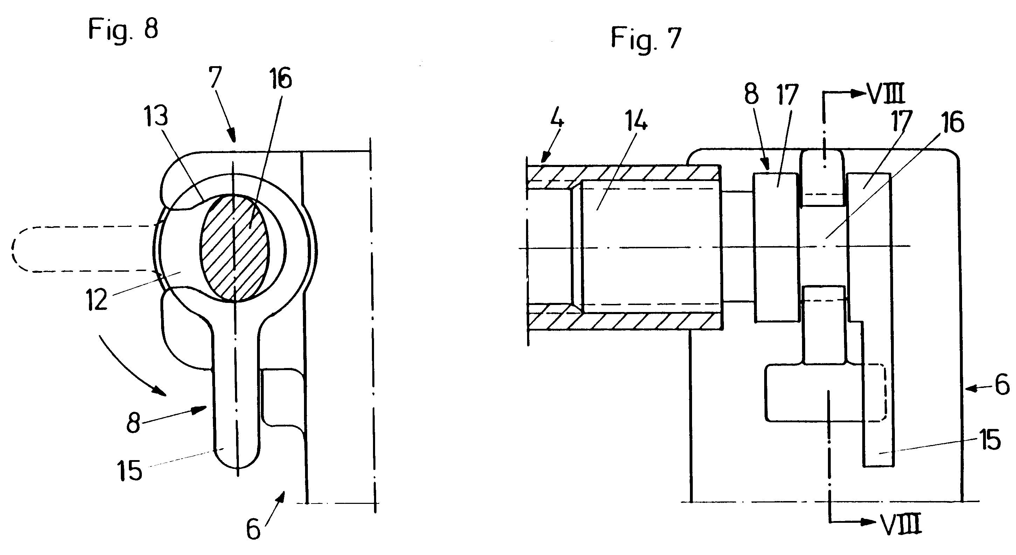

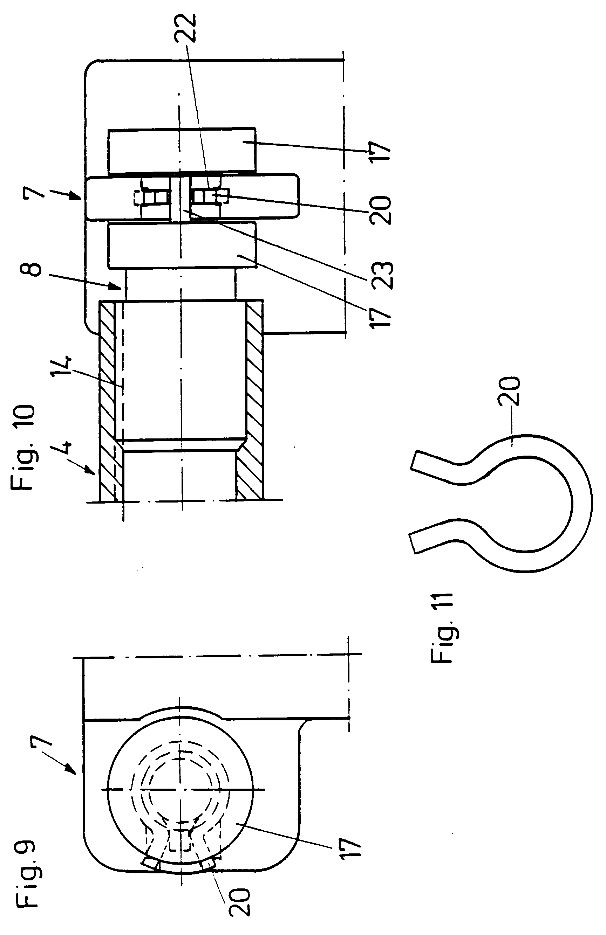

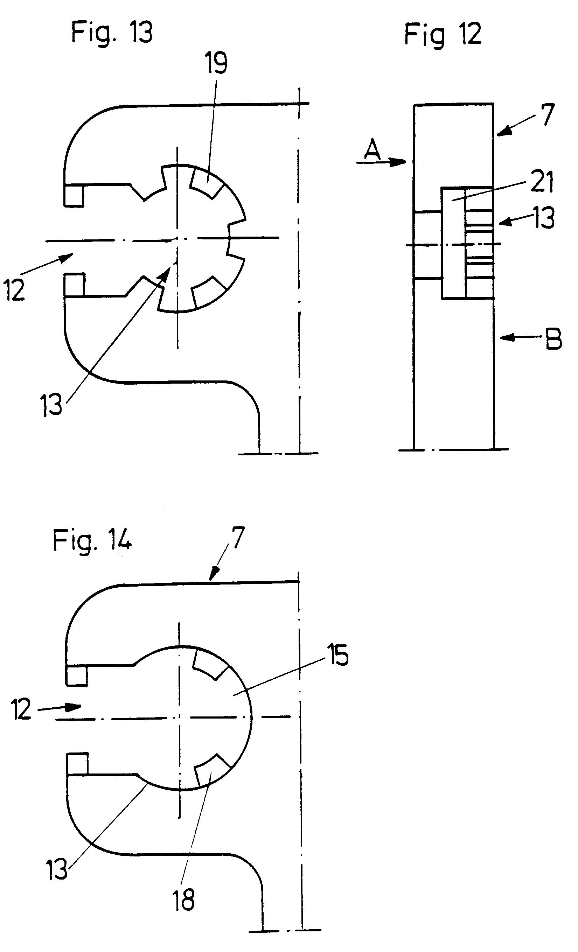

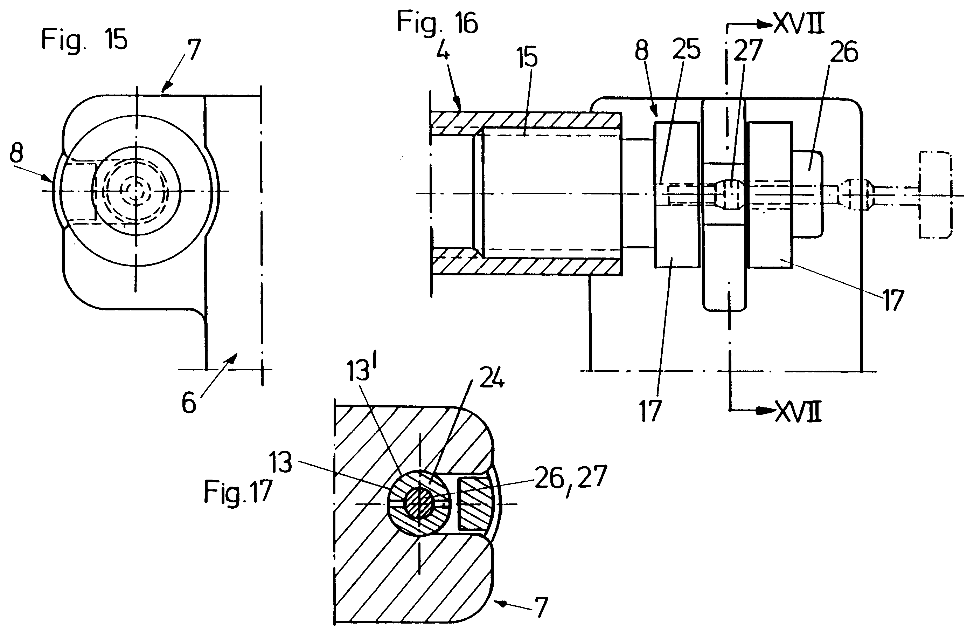

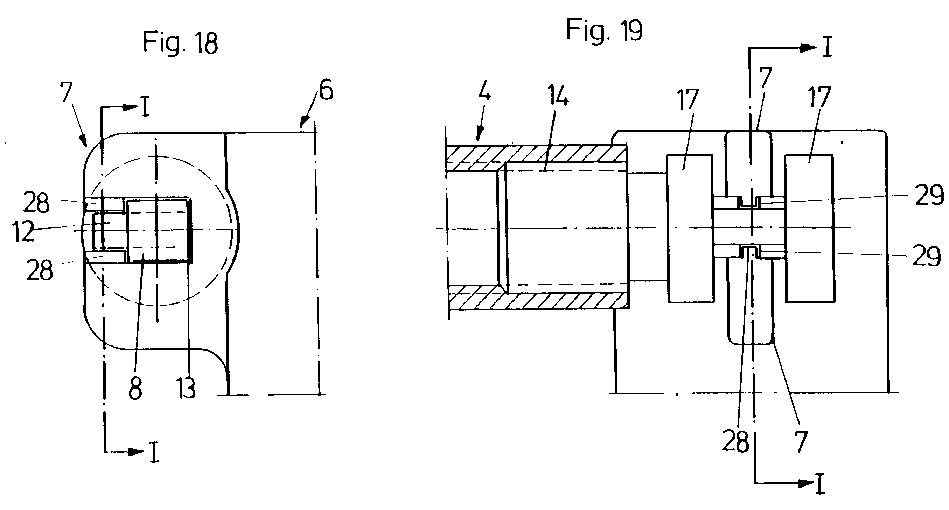

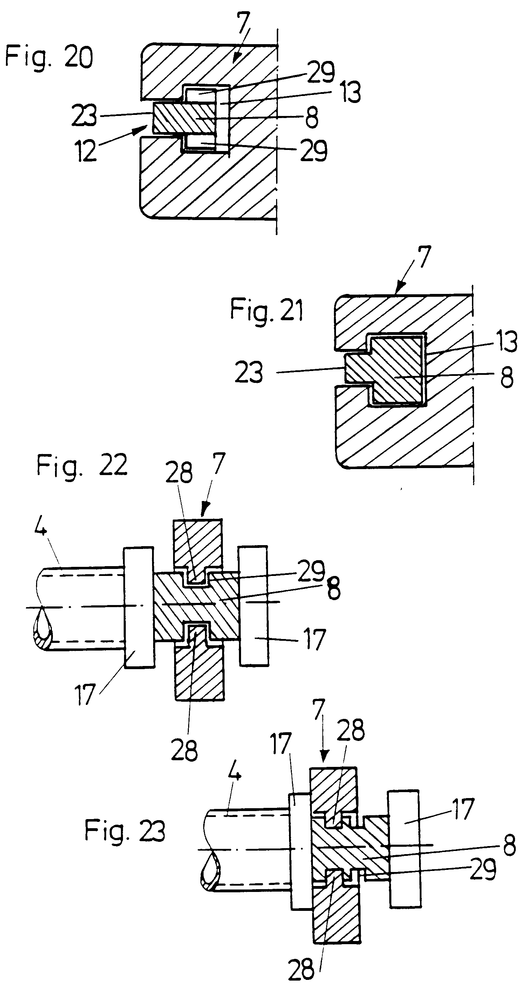

Die Fig. 1 zeigt ein schematisch gehaltenes Schaubild einer Schublade, die Fig. 2 zeigt einen Aufriß des Stützteiles, die Fig. 3 zeigt eine Seitenansicht des Stützteiles, die Fig. 4 zeigt eine Draufsicht auf den Stützteil teilweise im Schnitt, die Fig. 5 zeigt einen Aufriß eines weiteren Ausführungsbeispieles eines Stützteiles, die Fig. 6 zeigt ein Schaubild des Stützteiles nach Fig. 5, die Fig. 7 zeigt eine Ansicht der Relingbefestigung, wobei der Stützteil und der Verbindungsbeschlag in Seitenansicht gezeichnet sind und die Reling geschnitten ist, die Fig. 8 zeigt einen Schnitt nach der Linie VIII-VIII der Fig. 7, die Fig. 9 zeigt einen Aufriß eines Teiles des Stützteiles und der Befestigungsvorrichtung, die Fig. 10 zeigt eine Seitenansicht der Befestigung, die Fig. 11 zeigt einen Federring, die Fig. 12 zeigt eine Seitenansicht eines weiteren Ausführungsbeispieles des Stützteiles, die Fig. 13 zeigt eine Ansicht aus der Richtung des Pfeiles B der Fig. 12, die Fig. 14 zeigt eine Ansicht aus der Richtung des Pfeiles A der Fig. 12, die Fig. 19 zeigt eine Stirnansicht des Verbindungsbeschlages und einen Teil des Stützteiles im Aufriß bei einem weiteren Ausführungsbeispiel der Erfindung, die Fig. 16 zeigt eine Seitenansicht des Stützteiles und des Verbindungsbeschlages nach Fig. 15, die Fig. 17 zeigt einen Schnitt nach der Linie XVII-XVII der Fig. 16, die Fig. 18 zeigt einen Aufriß eines Stützteiles und einen Schnitt durch den Befestigungsteil des Verbindungsbeschlages bei einem weiteren Ausführungsbeispiel, die Fig. 19 zeigt eine Seitenansicht des Stützteiles und des Verbindungsbeschlages gemäß dem Ausführungsbeispiel der Fig. 18, die Fig. 20 und 21 zeigen je einen Schnitt nach der Linie I-I der Fig. 19 wobei der Befestigungsteil einmal in der Einrückstellung und einmal in der Riegelstellung gezeigt ist und die Figuren 22 und 23 zeigen gleiche Schnitte nach der Linie I-I der Fig. 18.

Wie aus der Fig. 1 der Zeichnungen ersichtlich, ist die Frontblende der Schublade mit 1, die Rückwand mit 3, und die Schubladenzargen sind mit 2 bezeichnet. An jeder Seite der Schublade ist oberhalb der Schubladenzarge eine Reling 4 vorgesehen.

Jede Reling 4 ist mittels eines Verbindungsbeschlages 5 an der Frontblende 1 befestigt. An die Rückwand 3 der Schublade ist an jeder Seite ein plattenförmiger Stützteil 6 angeschraubt.

Der plattenförmige Stützteil 6 weist einen seitlich vorspringenden Verankerungsteil 7 auf, in den die Reling 4 mit einem Befestigungsteil 8 einhängbar ist.

Ebenso ist der Stützteil 6 mit zwei Stegen 9 versehen, von denen jeweils einer an der Stirnseite der Rückwand 3 anliegt, sodaß der Stützteil 6 korrekt positioniert ist.

Wie aus den Figuren der Zeichnungen ersichtlich, ist der Stützteil 6 symmetrisch ausgeführt, sodaß er sowohl rechts als auch links an der Rückwand 3 angeschlagen werden kann.

Zur Befestigung des Stützteiles 6 sind in diesem Löcher 10 vorgesehen, die bei 11 beidseitig versenkt sind.

Im Verankerungsteil 7 ist ein offener Schlitz 12 und eine Aufnahmeöffnung 13 für den Befestigungsteil 8 vorgesehen.

Der Befestigungsteil 8 weist einen Gewindeabschnitt 14 auf, der in der Reling 4 aufgenommen ist.

Mittels des Gewindeabschnittes 14 ist der Befestigungsteil 8 mehr oder weniger weit in die Reling 4 einschraubbar, sodaß Unterschiede im Abstand zwischen der Frontblende 1 und der Rückwand 3 ausgeglichen werden können. Ebenso kann die Neigung der Frontblende 1 verstellt werden.

Der Schlitz 12 kann sowohl zur Seite als auch wie in den Figuren 5 und 6 gezeigt nach oben ausgerichtet sein. Ist der Schlitz 12 nach oben ausgerichtet, ist es auch möglich die Reling 4 bei in dem Korpus eingehängter Schublade zu montieren, da der Verbindungsverschlag mit dem Befestigungsteil 8 von oben in Stützteil 6 hineingedrückt werden kann.

Im Ausführungsbeispiel nach den Figuren 7 und 8 ist der Befestigungsteil 8 mit einem ovalen Abschnitt 16 versehen. Der ovale Abschnitt 16 befindet sich zwischen zwei flanschartigen Ansätzen 17. Weiters ist der Befestigungsteil 8 mit einem Griff 15 versehen, der am äußeren flanschartigen Ansatz 17 ausgeformt ist.

Zur Montage wird der Befestigungsteil 8 der in der Fig. 8 strichliert gezeigten Stellung durch den Schlitz 12 in die Aufnahmeöffnung 13 eingeschoben. Anschließend wird der Befestigungsteil 8 mittels des Griffes 15 verdreht, sodaß der ovale Bereich 16 hochgestellt wird und durch Reibung und Klemmung im Teil 7 gehalten ist.

Im Ausführungsbeispiel nach den Figuren 9 bis 14 ist der Teil 7 im Bereich der Aufnahmeöffnung 13 doppelwandig ausgeführt. Dabei sind an beiden Seiten zahnartige Vorsprünge 18 und 19 vorgesehen, die zwischen sich eine Aufnahme 21 für einen Federring 20 begrenzen. Der Federring 20 ist in die spaltartige Aufnahme 21 zwischen den zahnartigen Vorsprüngen 18 und 19 einschnappbar. Der Befestigungsteil 8 weist einen verjüngten Abschnitt 22 auf und ist mit diesem Abschnitt in den Federring 20 und somit in die Aufnahmeöffnung 13 des Teiles 7 eindrückbar.

Der Befestigungsteil 8 ist mit einer Nase 23 versehen, die verhindert, daß sich der Befestigungsteil 8, wenn die Reling 4 verdreht wird, mitbewegt.

Im Ausführungsbeispiel nach den Figuren 15 bis 17 ist der Befestigungsteil 8 mit Spreizbacken 24 versehen. Der Befestigungsteil 8 weist einen mittleren Kanal 25 auf, in dem ein Spreizstift 26 einsteckbar ist. Der Spreizstift 26 weist eine Wulst 27 auf, die die Spreizbacken 24 auseinander und an die Wand 13' der Aufnahmeöffnung 13 drückt.

Im Ausführungsbeispiel nach den Figuren 18 und 19 sind im Bereich des Schlitzes 12 Nasen 23 vorgesehen. Der Befestigungsteil 8 weist Nuten 29 auf.

Zur Montage wird der Befestigungsteil 8 wie in dem zuvor gezeigten Ausführungsbeispiel durch den Schlitz 12 in die Aufnahmeöffnung 13 gedrückt. Dabei werden die Nasen 23 durch die Nuten 29 geführt.

Anschließend wird der Befestigungsteil 8 axial verschoben und zwar vorteilhaft so weit, daß er mit einem der flanschartigen Ringe 17 satt am Teil 7 des Stützteils 6 anliegt. Durch Verdrehen der Reling 4 wird der gewünschte Abschnitt zur Frontblende 1 hergestellt und der Befestigungsteil 8 kann nicht mehr aus der Aufnahmeöffnung 13 durch den Schlitz 12 herausbewegt werden. Auch in diesem Fall ist der Befestigungsteil 8 mit einer Nase 23 versehen, die ein Mitdrehen des Befestigungsteiles 8 wenn die Reling 4 verdreht wird, verhindert.

## Patentansprüche

1. Verbindungsbeschlag zur Befestigung der Reling (4) einer Schublade an einer Rück- oder Seitenwand (2, 3) der Schublade mit einem an der Rück- oder Seitenwand (2, 3) befestigbaren Stützteil (6), an dem das hintere Ende der Reling (4) gehalten ist und mit einem in der Reling (4) einsteckbaren, vorzugsweise in diese einschraubbaren Befestigungsteil (8), an dem sich eine Arretiereinrichtung befindet, wobei der Befestigungsteil (8) in den Stützteil (6) einhängbar ist, und der Stützteil (6) mit einem offenen Schlitz (12) versehen ist, durch den der Befestigungsteil (8) ragt, dadurch gekennzeichnet, daß sich der Schlitz (12) schlüssellochartig zu einer Aufnahmeöffnung (13) erweitert und die Aufnahmeöffnung (13) zumindestens annähernd kreisförmig und ein Drehriegel (16) des Befestigungsteils (8) im Querschnitt oval ist, sodaß der Drehriegel (16) in der Aufnahmeöffnung (13) durch Reibschluß verriegelbar ist. (Fig. 7, 8)

2. Verbindungsbeschlag nach Anspruch 1, dadurch gekennzeichnet, daß der Schlitz (12) nach oben offen ist. (Fig. 5, 6)

3. Verbindungsbeschlag zur Befestigung der Reling (4) einer Schublade an einer Rück- oder Seitenwand (2, 3) der Schublade mit einem an der Rück- oder Seitenwand (2, 3) befestigbaren Stützteil (6), an dem das hintere Ende der Reling (4) gehalten ist und mit einem in der Reling (4) einsteckbaren, vorzugsweise in diese einschraubbaren Befestigungsteil (8), an dem sich eine Arretiereinrichtung befindet, wobei der Befestigungsteil (8) in den Stützteil (6) einhängbar ist, und der Stützteil (6) mit einem offenen Schlitz (12) versehen ist, durch den der Befestigungsteil (8) ragt, dadurch gekennzeichnet, daß sich der Schlitz (12) schlüssellochartig zu einer Aufnahmeöffnung (13) erweitert und sich in der Aufnahmeöffnung (13) ein Federring (20) befindet, wobei die kreisförmige Aufnahmeöffnung (13) an ihrem Rand mit Zähnen (18, 19) versehen ist, die in zwei Ebenen liegen und eine schlitzartige Aufnahme für den Federring (20) abgrenzen. (Fig. 13, 14)

4. Verbindungsbeschlag nach Anspruch 1, dadurch gekennzeichnet, daß der Befestigungsteil (8) eine Nut (22) aufweist in der der Federring (20) einschnappt. (Fig. 10)

5. Verbindungsbeschlag zur Befestigung der Reling (4) einer Schublade an einer Rück- oder Seitenwand (2, 3) der Schublade mit einem an der Rück- oder Seitenwand (2, 3) befestigbaren Stützteil (6), an dem das hintere Ende der Reling (4) gehalten ist und mit einem in der Reling (4) einsteckbaren, vorzugsweise in diese einschraubbaren Befestigungsteil (8), an dem sich eine Arretiereinrichtung befindet, wobei der Befestigungsteil (8) in den Stützteil (6) einhängbar ist, und der Stützteil (6) mit einem offenen Schlitz (12) versehen ist, durch den der Befestigungsteil (8) ragt, dadurch gekennzeichnet, daß der Befestigungsteil (8) mit Reibschluß in der Aufnahmeöffnung (13) verriegelbar ist, wobei der Befestigungsteil (8) Spreizbacken (24) aufweist und einen axialen Kanal (25), der einen Spreizstift (26) aufnimmt. (Fig. 16, 17)

6. Verbindungsbeschlag zur Befestigung der Reling (4) einer Schublade an einer Rück- oder Seitenwand (2, 3) der Schublade mit einem an der Rück- oder Seitenwand (2, 3) befestigbaren Stützteil (6), an dem das hintere Ende der Reling (4) gehalten ist und mit einem in der Reling (4) einsteckbaren, vorzugsweise in diese einschraubbaren Befestigungsteil (8), an dem sich eine Arretiereinrichtung befindet, wobei der Befestigungsteil (8) in den Stützteil (6) einhängbar ist, und der Stützteil (6) mit einem offenen Schlitz (12) versehen ist, durch den der Befestigungsteil (8) ragt, dadurch gekennzeichnet, daß sich der Schlitz (12) schlüssellochartig zu einer Aufnahmeöffnung (13) erweitert und der Befestigungsteil (8) mit Formschluß in der Aufnahmeöffnung (13) verriegelbar ist, wobei die Aufnahmeöffnung (13) viereckigen Umriß hat und der Befestigungsteil (8) einen Abschnitt mit korrespondierendem Querschnitt aufweist. (Fig. 18)

7. Verbindungsbeschlag nach Anspruch 6, dadurch gekennzeichnet, daß im Schlitz (12) Stege (28) vorgesehen sind, die in Nuten (29) im Befestigungsteil (8) eingreifen, wobei der Befestigungsteil (8), der mit einem Gewinde (14) in ein Muttergewinde der Reling (4) eingeschraubt ist, durch das Verschieben der Reling (4) im Stützteil (6) axial verschiebbar ist. (Fig. 18, 19)

8. Verbindungsbeschlag nach Anspruch 6, dadurch gekennzeichnet, daß der Befestigungsteil (8) eine seitlich vorspringende Nase (23) aufweist, die in den Schlitz (12) ragt. (Fig. 20, 21)

## Claims

1. Connecting fitting for securing the railing (4) of a drawer to a rear or side wall (2, 3) of the drawer, having a supporting part (6) which can be secured to the rear or side wall (2, 3) and on which the rear end of the railing (4) is held, and having a securing part (8) which can be inserted into the railing (4), preferably screwed into the latter, and on which there is a locking device, with the securing part (8) being suspendible in the supporting part (6) and the supporting part (6) being provided with an open slot (12) through which the securing part (8) projects, characterized in that the slot (12) widens in the manner of a keyhole into a receiving opening (13) and the receiving opening (13) is at least approximately circular and a rotary bolt (16) of the securing part (8) is oval in cross-section, so that the rotary belt (16) is lockable in the receiving opening (13) by frictional closure. (Figs. 7, 8)

2. Connecting fitting according to Claim 1, characterized in that the slot (12) is open towards the top. (Figs. 5, 6)

3. Connecting fitting for securing the railing (4) of a drawer to a rear or side wall (2, 3) of the drawer, having a supporting part (6) which can be secured to the rear or side wall (2, 3) and on which the rear end of the railing (4) is held, and having a securing part (8) which can be inserted into the railing (4), preferably screwed into the latter, and on which there is a locking device, with the securing part (8) being suspendible in the supporting part (6) and the supporting part (6) being provided with an open slot (12) through which the securing part (8) projects, characterized in that the slot (12) widens in the manner of a keyhole into a receiving opening (13) and a spring ring (20) is located in the receiving opening (13), with the circular receiving opening (13) being provided at its edge with teeth (18, 19) which lie in two planes and delimit a slot-like receiver for the spring ring (20). (Figs. 13, 14)

4. Connecting fitting according to Claim 1, characterized in that the securing part (8) has a groove (22) into which the spring ring (20) snaps in. (Fig. 10)

5. Connecting fitting for securing the railing (4) of a drawer to a rear or side wall (2, 3) of the drawer, having a supporting part (6) which can be secured to the rear or side wall (2, 3) and on which the rear end of the railing (4) is held, and having a securing part (8) which can be inserted into the railing (4), preferably screwed into the latter, and on which there is a locking device, with the securing part (8) being suspendible in the supporting part (6) and the supporting part (6) being provided with an open slot (12) through which the securing part (8) projects, characterized in that the securing part (8) is lockable in the receiving opening (13) with frictional closure, with the securing part (8) having spreading cheeks (24) and an axial channel (25) which receives a spreading pin (26). (Figs. 16, 17)

6. Connecting fitting for securing the railing (4) of a drawer to a rear or side wall (2, 3) of the drawer, having a supporting part (6) which can be secured to the rear or side wall (2, 3) and on which the rear end of the railing (4) is held, and having a securing part (8) which can be inserted into the railing (4), preferably screwed into the latter, and on which there is a locking device, with the securing part (8) being suspendible in the supporting part (6) and the supporting part (6) being provided with an open slot (12) through which the securing part (8) projects, characterized in that the slot (12) widens in the manner of a keyhole into a receiving opening (13) and the securing part (8) is lockable in the receiving opening (13) with form closure, with the receiving opening (13) having a rectangular outline and the securing part (8) having a section with corresponding cross-section. (Fig. 18)

7. Connecting fitting according to Claim 6, characterized in that there are provided in the slot (12) webs (28) which engage in grooves (29) in the securing part (8), with it being possible for the securing part (8), which is screwed by means of a thread (14) into a female thread of the railing (4), to be axially displaced by displacing the railing (4) in the supporting part (6). (Figs. 18, 19)

8. Connecting fitting according to Claim 6, characterized in that the securing part (8) has a laterally projecting nose (23) which projects into the slot (12). (Figs. 20, 21)

## Revendications

1. Ferrure d'assemblage pour la fixation de la barrette (4) d'un tiroir sur une paroi arrière ou latérale (2, 3) du tiroir, comprenant une pièce de support (6) qui peut être fixée sur la paroi arrière ou latérale (2, 3) et sur laquelle est maintenue l'extrémité arrière de la barrette (4) et comprenant une pièce de fixation (8) qui peut être enfichée, de préférence vissée, dans la barrette (4) et sur laquelle se trouve un dispositif d'arrêt, la pièce de fixation (8) pouvant être suspendue dans la pièce de support (6) et la pièce de support (6) étant pourvue d'une fente (12) ouverte à travers laquelle fait saillie la pièce de fixation (8), **caractérisée** par le fait que la fente (12) s'élargit en forme de trou de serrure en une ouverture de réception (13) et que l'ouverture de réception (13) est au moins approximativement circulaire et un verrou tournant (16) de la pièce de fixation (8) a une section transversale ovale si bien que le verrou tournant (16) peut être verrouillé dans l'ouverture de réception (13) par friction (fig. 7, 8).

2. Ferrure d'assemblage selon la revendication 1, **caractérisée** par le fait que la fente (12) est ouverte vers le haut (fig. 5, 6).

3. Ferrure d'assemblage pour la fixation de la barrette (4) d'un tiroir sur une paroi arrière ou latérale (2, 3) du tiroir, comprenant une pièce de support (6) qui peut être fixée sur la paroi arrière ou latérale (2, 3) et sur laquelle est maintenue l'extrémité arrière de la barrette (4) et comprenant une pièce de fixation (8) qui peut être enfichée, de préférence vissée, dans la barrette (4) et sur laquelle se trouve un dispositif d'arrêt, la pièce de fixation (8) pouvant être suspendue dans la pièce de support (6) et la pièce de support (6) étant pourvue d'une fente (12) ouverte à travers laquelle fait saillie la pièce de fixation (8), **caractérisée** par le fait que la fente (12) s'élargit en forme de trou de serrure en une ouverture de réception (13) et qu'une bague élastique (20) se trouve dans l'ouverture de réception (13), l'ouverture de réception (13) circulaire étant pourvue sur son bord de dents (18, 19) qui se trouvent dans deux plans et délimitent un logement en forme de fente pour la bague élastique (20) (fig. 13, 14).

4. Ferrure d'assemblage selon la revendication 1, **caractérisée** par le fait que la pièce de fixation (8) présente une encoche (22) dans laquelle s'enclenche la bague élastique (20) (fig. 10).

5. Ferrure d'assemblage pour la fixation de la barrette (4) d'un tiroir sur une paroi arrière ou latérale (2, 3) du tiroir, comprenant une pièce de support (6) qui peut être fixée sur la paroi arrière ou latérale (2, 3) et sur laquelle est maintenue l'extrémité arrière de la barrette (4) et comprenant une pièce de fixation (8) qui peut être enfichée, de préférence vissée, dans la barrette (4) et sur laquelle se trouve un dispositif d'arrêt, la pièce de fixation (8) pouvant être suspendue dans la pièce de support (6) et la pièce de support (6) étant pourvue d'une fente (12) ouverte à travers laquelle fait saillie la pièce de fixation (8), **caractérisée** par le fait que la pièce de fixation (8) peut être verrouillée par friction dans l'ouverture de réception (13), la pièce de fixation (8) présentant des mâchoires expansibles (24) et un canal axial (25) qui loge une tige d'écartement (26) (fig. 16, 17).

6. Ferrure d'assemblage pour la fixation de la barrette (4) d'un tiroir sur une paroi arrière ou latérale (2, 3) du tiroir, comprenant une pièce de support (6) qui peut être fixée sur la paroi arrière ou latérale (2, 3) et sur laquelle est maintenue l'extrémité arrière de la barrette (4) et comprenant une pièce de fixation (8) qui peut être enfichée, de préférence vissée, dans la barrette (4) et sur laquelle se trouve un dispositif d'arrêt, la pièce de fixation (8) pouvant être suspendue dans la pièce de support (6) et la pièce de support (6) étant pourvue d'une fente (12) ouverte à travers laquelle fait saillie la pièce de fixation (8), **caractérisée** par le fait que la fente (12) s'élargit en forme de trou de serrure en une ouverture de réception (13) et que la pièce de fixation (8) peut être verrouillée par complémentarité de formes dans l'ouverture de réception (13), l'ouverture de réception (13) ayant un contour quadrangulaire et la pièce de fixation (8) présentant une partie de section transversale correspondante (fig. 18).

7. Ferrure d'assemblage selon la revendication 6, **caractérisée** par le fait qu'il est prévu dans la fente (12) des nervures (28) qui s'engagent dans des encoches (29) de la pièce de fixation (8), la pièce de fixation (8) qui est vissée avec un filetage (14) dans un taraudage de la barrette (4), pouvant être déplacée axialement par le déplacement de la barrette (4) dans la pièce de support (6) (fig. 18, 19).

8. Ferrure d'assemblage selon la revendication 6, **caractérisée** par le fait que la pièce de fixation (8) présente un tenon (23) qui fait saillie latéralement et pénètre dans la fente (12) (fig. 20, 21).
